# EUROPÄISCHE PATENTANMELDUNG

(11) **EP 2 944 930 A2**
(43) Veröffentlichungstag der Anmeldung: **18.11.2015**
(21) Anmeldenummer: 14001857.3
(22) Anmeldetag: 28.05.2014
(51) Int. Cl.: G01J 3/02, G01J 3/14, G02B 27/10, G06K 9/62, G01J 1/02, G01J 3/28

(54) **Räumlich und spektral auflösende Hyperspektralkamera und Verfahren**

(30) Priorität: 16.05.2014 DE 102014106974
(71) Anmelder: Cubert GmbH, 89081 Ulm (DE)
(72) Erfinder: Jung, Andràs, 06108 Halle/Saale (DE); Michels, René, 89073 Ulm (DE); Graser, Rainer, 89073 Ulm (DE)
(74) Vertreter: Meyer, Thorsten

(57) **Zusammenfassung**

Die Erfindung betrifft eine räumlich und spektral auflösende Hyperspektralkamera (2), mit einem Strahlteiler (22), der das eintreffende Licht (11) aufteilt (12, 13) auf ein hochaufgelöst abbildendes Modul (24), das dazu ausgestaltet ist, ein aufzunehmendes Objekt (1) auf eine flächig aufgelöste Bildebene (31) abzubilden und hochauflösende Bildinformationen liefern kann, und weiterhin auf ein spektral auflösendes Modul (23 und 25), das dazu ausgestaltet ist, das aufzunehmende Objekt (1) auf eine spektral auflösende Bildebene (41) abzubilden und Spektraldaten liefern kann, wobei eine Auswerteeinheit (32, 42, 5) vorhanden ist, die dazu ausgestaltet ist, die Bildinformation des hochaufgelöst abbildenden Moduls (24) und die Spektraldaten des spektral auflösenden Moduls (23 und 25) auszulesen, wobei die Auswerteeinheit (32, 42, 5) die spektral aufgelösten Bilddaten (43) mit den hochaufgelösten Bilddaten (33) vermittels einer Überlagerungs- und Vergleichseinheit (5) verknüpft, wobei aus den Spektraldaten eine Markierung und/oder farbliche Hervorhebung gegenüber den hochaufgelösten Bildinformationen des hochaufgelöst abbildendes Moduls (24) als Messbild (6) erfolgt. Des weiteren betrifft die Erfindung ein Verfahren zur Generierung eines ortsaufgelösten Bildes mit Spektraldateninformation.

## Beschreibung

Die Erfindung betrifft eine räumlich und spektral auflösende Hyperspektralkamera sowie ein Verfahren zur Generierung eines ortsaufgelösten Bildes mit Spektraldateninformation.

Räumlich auflösende Kameras sind üblich es sind auch spektral auflösende Kameras mit Liniendetektoren oder Arraydetektoren bekannt.

Problematisch ist es beim Stand der Technik dabei jedoch Bilddaten der zwei Kameratypen miteinander in Bezug zu bringen.

Aufgabe der Erfindung ist es eine verbesserte räumlich und spektral auflösende Hyperspektralkamera sowie ein Verfahren zur Generierung eines ortsaufgelösten Bildes mit Spektraldateninformation zur Verfügung zu stellen, bei dem die Daten eines spektral aufgelösten Bildes und eines räumlich aufgelösten Bildes zuverlässig in Bezug gebracht werden.

Diese Aufgabe wird durch eine räumlich und spektral auflösende Hyperspektralkamera nach den Merkmalen des Anspruchs 1 und ein Verfahren zur Generierung eines ortsaufgelösten Bildes mit Spektraldateninformation nach den Merkmalen des Anspruchs 8 gelöst.

Erfindungsgemäß ist eine räumlich und spektral auflösende Hyperspektralkamera mit einem Strahlteiler vorgesehen, der das eintreffende Licht aufteilt auf ein hochaufgelöst abbildendes Modul, das dazu ausgestaltet ist, ein aufzunehmendes Objekt auf eine flächig aufgelöste Bildebene abzubilden und hochauflösende Bildinformationen liefern kann, und weiterhin auf ein spektral auflösendes Modul, das dazu ausgestaltet ist, das aufzunehmende Objekt auf eine spektral auflösende Bildebene abzubilden und Spektraldaten liefern kann, die sich dadurch auszeichnet, dass eine Auswerteeinheit vorhanden ist, die dazu ausgestaltet ist, die Bildinformation des hochaufgelöst abbildenden Moduls und die Spektraldaten des spektral auflösenden Moduls auszulesen, wobei die Auswerteeinheit die spektral aufgelösten Bilddaten mit den hochaufgelösten Bilddaten vermittels einer Überlagerungs- und Vergleichseinheit verknüpft, wobei aus den Spektraldaten eine Markierung und/oder farbliche Hervorhebung gegenüber den hochaufgelösten Bildinformationen des hochaufgelöst abbildendes Moduls als Messbild erfolgt.

Hierdurch ist auf besonders effektive Weise die direkte Verknüpfung der spektralen Bilddaten mit den räumlichen Bilddaten ohne Zeitversatz, Achsenversatz oder anderen Blickwinkel gewährleistet. Die Anwendungen einer solchen Hyperspektralkamera sind vielfältig. So kann einem Betrachter der Daten auf einem Bildschirm durch farbliche Markierung das Vorhandensein einer bestimmtem Baumart in einem Mischwald, z.B. bei Auswertung von Luftbildern aufgezeigt werden.

Bei den landwirtschaftlichen Anwendungen, sind vor allem Ansätze bevorzugt, die physiologische Pflanzenparameter (Vegetative und generative Pflanzenteile) oder geochemische Bodenparameter nicht-destruktive charakterisieren können. Dazu gehören auch die Detektion der Blattpigmente, die Bestimmung des Wassergehaltes und der Frische von landwirtschaftlichen Primärprodukten wie Obst und Gemüse. Ebenso relevant ist die Kamera für die landwirtschaftliche Feldrobotik, die in der spektralen Unkrautdetektion zukünftig eingesetzt werden kann. Die Phytopathologie wird aus der mobilen Spektralbilderfassung besonders profitieren, weil die Informationen in Echtzeit generiert und in der sensorbasierten Prozessführung der Landwirtschaft integriert werden könnten.

Neben forst- und landwirtschaftlichen Applikationen , die die Zustandskontrolle den, den Dünge-, Spritzmittel- oder Wasserbedarf, die Wachstumsperiode oder schlicht die Art von diversen Pflanzen ermöglicht sind solche Kameras auch zum Auffinden von Bodenschätzen wie beispielsweise seltener Erden aus der Luft denkbar. Auch die schnelle Bestimmung des Bodenzustandes (Organischer Kohlengehalt, Stickstoff, Kalium usw.) ist denkbar.

Denkbar sind aber auch Überwachungskameras die in Produktionsanlagen die chemische Signatur von Substanzen wie austretende Gase oder Flüssigkeiten ortsaufgelöst detektieren und Anzeigen können. Das Verfahren bzw. die Anwendung der Kamera eignet sich weiterhin für medizinische Diagnoseapparate, beispielsweise zur spektral hochauflösenden Detektion von Hautkrebs oder zur ortsaufgelösten Messung der Sauerstoffsättigung im Gewebe eines Patienten. Die Sauerstoffsättigung wird mit spektraler Messtechnik heutzutage bereits punktuell bestimmt, durch die Verortung ist eine präzise und schnelle Diagnose beispielsweise bei Wundheilungsapplikationen denkbar. Eine präzise Verortung der hochaufgelösten Bilddaten mit den spektralen Bilddaten wird weiterhin eine optimale Unterstützung eines Chirurgen bei Operationen, beispielsweise durch die bildliche Hervorhebung von Venen, Arterien oder Nervenfasern, insbesondere auch bei minimalinvasiven Verfahren ermöglichen. Jede spektrale Information lässt sich nutzen, um einem Betrachter diese für das menschliche Auge nicht sichtbaren Informationen in das "Foto" einzublenden oder in der nachfolgenden Datenverarbeitung der gesammelten Informationen zu nutzen.

Eine vorteilhafte Ausgestaltung der Erfindung schlägt vor, dass das spektral auflösende Modul eine flächige Ortsauflösung liefert, wobei hierzu ein flächiges regelmäßiges Lochmuster und/oder ein Linsenarray und/oder ein Schlitzmuster vor einem dispersiven Element, beispielsweise einem Prisma, angeordnet ist und im Lichtweg dahinter ein zweidimensionales Detektorarray angeordnet ist.

Die Bildinformation sind von Vorteil in einer x,y-Matrix und die Spektraldaten in einer x',y',λ-Matrix abgelegt. x ist dabei größer als x' und y ist größer als y'.

Vorteilhafterweise kann vorgesehen sein, dass eine anwendungsbezogene Weiterverarbeitungsvorrichtung, insbesondere ein separates Computersystem zur Weiterverarbeitung der Bildinformation und der Spektraldaten vorhanden ist.

Von Vorteil kann nach einer Ausgestaltung der Erfindung vorgesehen sein, dass die dispersive Einheit durch ein refraktives Element oder ein wellenlängenselektives empfindliches Element ausgestaltet ist.

Im Sinne der Erfindung kann die spektral auflösende Bildebene auch durch einen oder mehrere Liniendetektoren dargestellt werden. Insbesondere bei der Verwendung mehrerer Liniendetektoren lassen sich wiederum spektral ortsaufgelöste Bilddaten erzeugen, welche den hochaufgelösten Bilddaten zugeordnet werden.

Eine bevorzugte Weiterbildung der Erfindung sieht vor, dass die Auswerteeinheit eine Überlagerungs- und Vergleichseinheit aufweist, der eine Datenbank von Spektraldaten zugeordnet ist, vermittels welcher ein Vergleich der Spektral aufgelösten Bilddaten mit Messwerten aus der Datenbank erfolgen kann, wobei in Abhängigkeit des Ergebnisses des Vergleichs eine Falschfarbenmarkierung des/der Bilddaten-Bildpunkte/s erfolgt, die/der dem/den entsprechenden Spektraldaten-Bildpunkte/n zugeordnet ist/sind.

Von Vorteil kann ein Bildspeicher und/oder ein Bildschirm vorhanden sein auf welchem die Bilddaten mit der Falschfarbenmarkierung aus der Auswerteeinheit abgelegt bzw. angezeigt werden.

Das erfindungsgemäße Verfahren zur Generierung eines ortsaufgelösten Bildes mit Spektraldateninformation ist gekennzeichnet durch die Schritte:
- Auftrennung eines Strahlenwegs eines abzubildenden Objektes,
- separate Detektion der beiden Strahlenwege, zum einen auf einem ortsauflösenden Detektor mit einer hohen Ortsauflösung x,y der Bildinformation,
   zum anderen auf einem orts- und spektral über λ auflösenden Detektor einer niedrigeren Ortsauflösung x',y' der Spektraldaten,
- Umrechnung der x',y'-Auflösung der Spektraldaten auf die x,y-Auflösung der Bildinformation, insbesondere unter Zuhilfenahme von Interpolationsverfahren,
- Zusammenführen der x,y-Bildinformation mit der x,y,λ-Spektraldaten.

Ein weiterer vorteilhafter Verfahrensschritt kann vorsehen, dass die Bildinformation in einer x,y-Matrix abgelegt werden und die Spektraldaten in einer x',y',λ-Matrix abgelegt werden.

Weiterhin kann von Vorteil sein, dass das Verfahren durch die weiteren Schritte ausgestaltet ist, wonach die Zusammenführung der x,y-Bildinformation mit der x,y,λ-Spektraldaten zu einem Messbild erfolgt und dass die Darstellung des Messbildes als Intensitätsdarstellung spezieller spektraler Intensitäten oder Intensitätsdarstellung verrechneter spektraler Intensitäten erfolgt und/oder als Falschfarben-Darstellung durch Markierung verschiedener Bildpunkte.

Des weiteren kann von Vorteil sein, dass das Verfahren die weiteren Schritte wie folgt vorsieht, wonach ein
- Vergleich der einzelnen spektralen Daten mit einer in einer Datenbank hinterlegten Spektraldaten erfolgt, eine
- Bestimmung von Korrelationswerten zwischen den einzelnen spektralen Daten mit dem in einer Datenbank hinterlegten Spektraldaten erfolgt, ein
- Vergleich der einzelnen errechneten Korrelationswerte mit einen oder mehreren Schwellwerten erfolgt, eine
- Zuordnung der Korrelationswerte zu den Schwellwerten erfolgt, ein
- Darstellen des Messbildes mit der Einfärbung der einzelnen Bildpunkte passend zu den ermittelten Schwellwerten für jeden einzeln ermittelten spektralen Datenpunkt erfolgt.

Das Verfahren mit dem die Bilder vorverarbeitet werden teilt sich in mehrere Stufen auf. In den ersten Stufen werden die einzelnen Aufnahmen separat voneinander bearbeitet. Darauf folgend werden die Daten dann in der Kombination ausgewertet. Bei der spektral hoch aufgelösten Aufnahme müssen die spektralen Daten in einen ersten Schritt auf dem Kamerachip separiert werden. Dies geschieht durch einmalige Zuordnung der einzelnen örtlichen Aufnahmebereiche. Hierbei werden jeden Pixel auf dem Kamerachip ein Ort in der Aufnahme und eine spezielle Wellenlänge zugeordnet. Nach dieser einmaligen Zuordnung können die Spektraldaten gezielt vom Kamerachip ausgelesen werden. Und rückwirkend jeder Pixelintensität eine Wellenlänge (λ) und einem Ort (x', y') in der Aufnahme zugeordnet werden. In einem weiteren Bearbeitungsschritt werden aus den Ortskoordinaten der Aufnahmen Wellenlängenabhängige Aufnahmen erzeugt. Welche dann zu einen grob gerasterten Spektralcube (x', y', λ) zusammengeführt werden können. In einem weiteren Schritt werden die Daten dann so angepasst, dass die Auflösung der spektralen Daten zu der der hochaufgelösten Aufnahme (x, y) passt. Die geschieht zu diesem Zeitpunkt noch durch ein lineares Interpolationsverfahren. Wobei die neu erzeugten Daten markiert werden können um sie bei den weiteren Verarbeitungsschritten wieder als solche zu erkennen.

In den oben beschriebenen Verfahren werden die Daten der beiden Aufnahmen so vorbereitet, dass sie geometrisch zueinander passen. In einen ersten Schritt werden dann die Daten einfach geometrisch übereinander gelegt. Hierbei wird nur die Ausrichtung der Bilder, das Größenverhältnis und die Verzerrung beachtet und korrigiert. Mit Hilfe dieser beiden Verrechnungsverfahren kann das zusammengeführte Messbild dann neu eingefärbt werden. Als Ergebnis liegt ein hoch örtlich aufgelöstes Bild vor bei den die Spektralinformation an die Geometrie der im Bild Abgebildeten Objekte angepasst ist.

Nutzung der Informationen aus beiden Aufnahmen:

Bei vielen Fragestellungen ist so wohl die Geometrie wie auch die Spektraleinformation, welche die Chemie der abgebildeten Elemente wiederspiegelt, zu deren Auswertung, von Nöten. Um mit beiden Informationen arbeiten zu können, können die Aufnahmen wie oben beschrieben zusammengeführt werden. In manchen Fällen kann bereits eine geometrische Zuordnung der Daten ausreichend sein. Mit Informationen über die Geometrie der aufgenommenen Elemente und deren Spektralensignatur können sehr aufschlussreiche Beurteilungen getroffen werden.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Darstellung einer erfindungsgemäßen Hyperspektralkamera,
- Fig. 2: eine beispielhafte Darstellung des Lochmusters,
- Fig. 3: eine beispielhafte Darstellung eines Schlitzmusters,
- Fig. 4: eine beispielhafte Anordnung der aufgespreizten Lichtbündel auf dem Detektor,
- Fig. 5: eine beispielhafte Anordnung der aufgespreitzeten Schlitze, und
- Fig. 6: ein schematisches beispielhaftes Ablaufdiagramm des erfindungsgemäßen Verfahrens.

Die in den Figuren gleichen Bezugsziffern bezeichnen gleiche oder gleich wirkende Elemente.

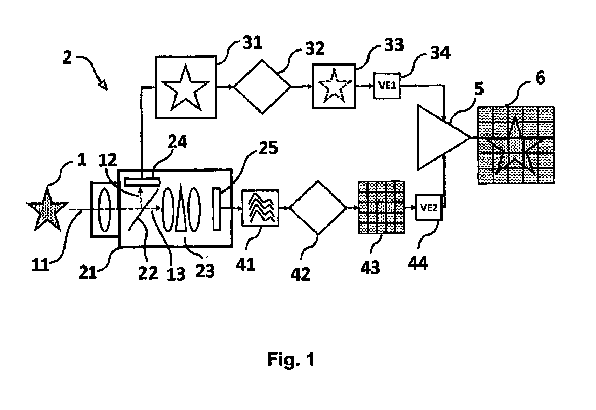

In Fig. 1 ein schematischer beispielhafter Aufbau einer erfindungsgemäßen räumlich und spektral auflösenden Hyperspektralkamera 2 gezeigt.

Das in eine optische Einheit 21 über ein Objektiv eintreffende Licht 11 eines aufzunehmendes bzw. zu analysierenden Objekts 1 wird vermittels eines Strahlteilers 22 aufteilt.

Entsprechend dem ersten Lichtweg 12 auf ein hochaufgelöst abbildendes Modul 24, das dazu ausgestaltet ist, ein aufzunehmendes Objekt 1 auf eine flächig aufgelöste Bildebene 31 abzubilden und hochauflösende Bildinformationen liefern kann, und entsprechend dem zweiten Lichtweg 13 auf ein spektral auflösendes Modul aus einer dispersiven Einheit 23 und einem Detektor 25, das dazu ausgestaltet ist, das aufzunehmende Objekt 1 auf eine spektral auflösende Bildebene 41 abzubilden und Spektraldaten liefern kann.

Die hochaufgelösten Bilddaten des hochaufgelösten abbildenden Moduls 24 und die spektral aufgelösten Bilddaten (Spektraldaten) des spektral auflösenden Moduls 23 und 25 werden dann einer Auswerteeinheit aus einer Bilddaten-Vorverarbeitungseinheit 32, die dazu ausgestaltet ist, die Bilddaten so vor zu verarbeiten, dass Verzeichnungsfehler, die durch die Optik entstehen, beseitigt werden, und einer Spektraldaten-Vorverarbeitungseinheit 42, die dazu ausgestaltet ist, die Spektren zu korrigieren und räumlich zuzuordnen, zugeführt.

Die hochaufgelösten und korrigierten Bilddaten 33 und die spektral aufgelöste Bilddaten (Spektraldaten) 43 werden im Beispiel noch jeweils durch eine optionale Nachbearbeitung 34 und 44 dergestalt nachbearbeitet, dass die räumliche Auflösung und die Orientierung der Bilddaten zueinander passt.

Die Auswerteeinheit verknüpft die spektral aufgelösten Bilddaten 43 mit den hochaufgelösten Bilddaten 33 vermittels einer Überlagerungs- und Vergleichseinheit 5, wobei aus den Spektraldaten eine Markierung und/oder farbliche Hervorhebung gegenüber den hochauflösenden Bildinformationen des hochaufgelöst abbildendes Moduls 24 als Messbild 6 erfolgt.

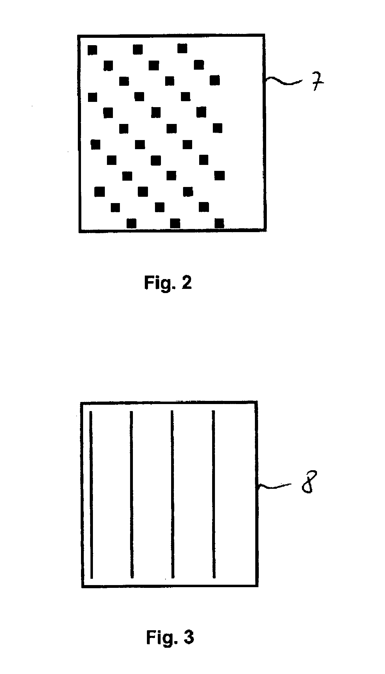

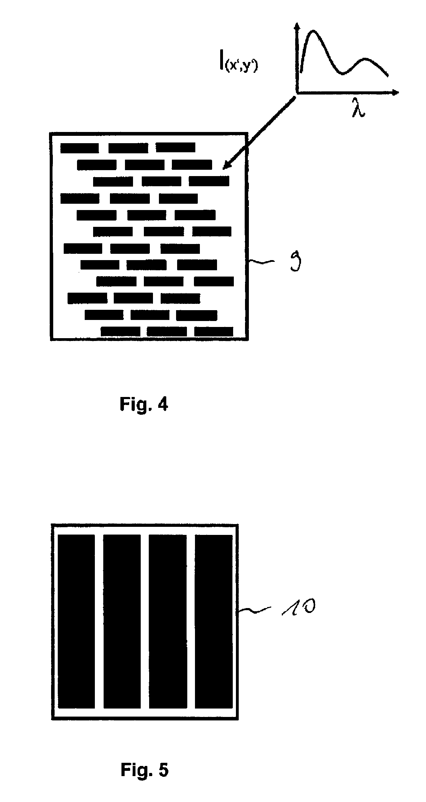

Fig. 2 zeigt eine Variante des Lochmusters 7, welches für die Erzeugung der Ortsauflösung im spektral auflösenden Modul verwendet werden kann. Dieses Lochmuster steht in der Gegenstandsebene des spektral auflösenden Moduls. Trifft Licht über den Lichtweg 13 auf dieses Lochmuster können nur Lichtbündel an der Position der Löcher durch treten. Diese Lichtbündel werden dann über die dispersive Einheit spektral aufgespreizt. Die Ordnung der Löcher ist dabei so gewählt, dass ihr Abstand der Länge der spektralen Aufspreizung entspricht. Passen die Länge der Aufspreizung zum Abstand der Löcher kann eine vollflächige Ausnutzung des Detektors 25 erreicht werden. Fig. 4 zeigt die Anordnung der spektral aufgespreizten Lichtbündel 9, die durch die einzelnen Löcher treten auf dem Detektor. Mit dem Durchmesser der einzelnen Löcher kann die spektrale Auflösung, vergleichbar mit einem Schlitz bei handelsüblichen Spektrometern, bestimmt werden. Um einen Zusammenhang zwischen der Ortsposition im Objekt 1 und der Ortsposition auf dem Detektor zu erreichen wird das System bei der Herstellung einmalig eingemessen. Dabei wird jedem spektral aufgespritztem Lichtbündel eine Ortsposition x`,y` zugewiesen. Dem spektral aufgespreizte Lichtbündel wird bei der Einmessung weiterhin an jedem Ort einer definierten Wellenlänge λ zugeordnet. Es ergibt sich so für jeden Ort des spektral aufgespteizten Lichtbündels die Intensität I(x',y',λ) welches an einem Lichtbündel schematisch in Abbildung Fig. 4 gezeigt ist.

Fig. 3 Zeigt die Anordnung von einzelnen Schlitzen 8 zur Erzeugung der der örtlichen Auflösung im spektral auflösendem Modul. Dieses Schlitzmuster steht in der Bildebene des spektral auflösenden Moduls. Das eintretende Licht 13 tritt auf das Schlitzmuster und kann nur bei den einzelnen Schlitzen durchtreten. Es entstehen schmale Lichtlinien. Diese Lichtlinien werden durch die dispersive Einheit 23 spektral aufgespreizt und auf den Detektor 25 abgebildet. Der Detektor 25 muss in diesem Fall als 2D Array ausgeführt sein. Wird der Abstand der Schlitze so gewählt, dass er der Länge der spektralen Aufspreizung der Lichtlinien entspricht, kann der Detektor vollflächig genutzt werden. Siehe Anordnung der einzelnen Schlitze 10 in Fig. 5. Um einen Zusammenhang zwischen der Ortsposition im Objekt 1 und der Ortsposition auf dem Detektor zu erreichen wird das System bei der Herstellung einmalig eingemessen. Wobei auch wieder, wie in Fig. 4 gezeigt, für jedes Lichtbündel die Zuordnung der auf den Detektor auftreffenden Intensität I(x',y',λ) erfolgt.

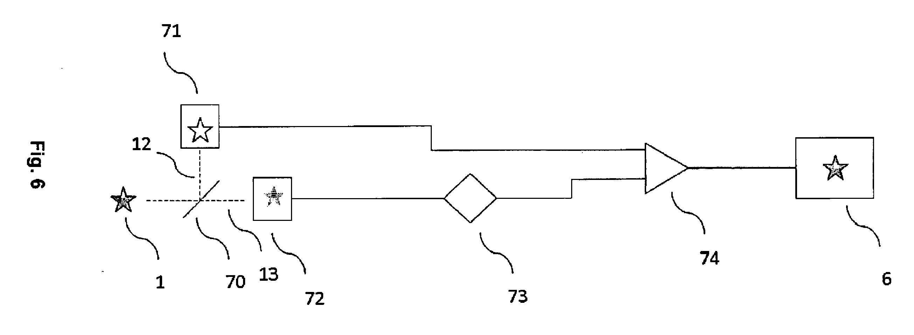

In Fig. 6 ist der oben beschriebene Verfahrensablauf in einem Diagramm wiedergegeben.

Dargestellt sind die Schritte:
- Auftrennung eines Strahlenwegs 70 eines abzubildenden Objektes 1,
- separate Detektion der beiden Strahlenwege 12, 13, zum einen auf einem ortsauflösenden Detektor 71 mit einer hohen Ortsauflösung x,y der Bildinformation,
   zum anderen auf einem orts- und spektral über λ auflösenden Detektor 72 einer niedrigeren Ortsauflösung x',y' der Spektraldaten,
- Umrechnung der x',y'-Auflösung der Spektraldaten auf die x,y-Auflösung der Bildinformation 73, insbesondere unter Zuhilfenahme von Interpolationsverfahren,
- Zusammenführen 74 der x,y-Bildinformation mit der x,y,λ-Spektraldaten,
- Als Endresultat der Verrechnung wird das Messbild 6 erzeugt, angezeigt oder weiterverarbeitet.

### Bezugszeichenliste

- 1: aufzunehmendes Objekt
- 11: eintreffendes Licht
- 12: Licht
- 13: Licht

- 2: Hyperspektralkamera
- 21: optische Einheit
- 22: Strahlteiler
- 23: dispersives Einheit
- 24: hochaufgelöst abbildendes Modul
- 25: Detektor

- 31: optisch auflösende Bildebene
- 32: Bilddaten-Vorverarbeitungseinheit
- 33: hochaufgelöste korrigierte Bilddaten
- 34: optionale Nachbearbeitung

- 41: spektral auflösende Bildebene
- 42: Spektraldaten-Vorverarbeitungseinheit
- 43: spektral aufgelöste Bilddaten (Spektraldaten)
- 44: optionale Nachbearbeitung

- 5: Überlagerungs- und Vergleichseinheit
- 6: Messbild
- 7: Lochmuster
- 8: Anordnung von einzelnen Schlitzen
- 9: aufgespreiztes Lichtbündel
- 10: Anordnung von einzelnen Schlitzen

## Patentansprüche

1. Räumlich und spektral auflösende Hyperspektralkamera (2), mit einem Strahlteiler (22), der das eintreffende Licht (11) aufteilt (12, 13) auf
ein hochaufgelöst abbildendes Modul (24), das dazu ausgestaltet ist, ein aufzunehmendes Objekt (1) auf eine flächig aufgelöste Bildebene (31) abzubilden und hochauflösende Bildinformationen liefern kann,
und weiterhin auf ein spektral auflösendes Modul (23 und 25), das dazu ausgestaltet ist, das aufzunehmende Objekt (1) auf eine spektral auflösende Bildebene (41) abzubilden und Spektraldaten liefern kann,
**dadurch gekennzeichnet,**
**dass** eine Auswerteeinheit (32, 42, 5) vorhanden ist, die dazu ausgestaltet ist, die Bildinformation des hochaufgelöst abbildenden Moduls (24) und die Spektraldaten des spektral auflösenden Moduls (23 und 25) auszulesen,
wobei die Auswerteeinheit (32, 42, 5) die spektral aufgelösten Bilddaten (43) mit den hochaufgelösten Bilddaten (33) vermittels einer Überlagerungs- und Vergleichseinheit (5) verknüpft, wobei aus den Spektraldaten eine Markierung und/oder farbliche Hervorhebung gegenüber den hochaufgelösten Bildinformationen des hochaufgelöst abbildendes Moduls (24) als Messbild (6) erfolgt.

2. Hyperspektralkamera nach Anspruch 1,
**dadurch gekennzeichnet,**
**dass** das spektral auflösende Modul (23, 25) eine flächige Ortsauflösung liefert, wobei hierzu ein flächiges regelmäßiges Lochmuster und/oder ein Linsenarray und/oder ein Schlitzmuster vor einem Prisma angeordnet ist und im Lichtweg dahinter ein zweidimensionales Detektorarray angeordnet ist.

3. Hyperspektralkamera nach Anspruch 1 oder 2,
**dadurch gekennzeichnet,**
**dass** die Bildinformation in einer x,y-Matrix abgelegt sind und die Spektraldaten in einer x',y',λ-Matrix abgelegt sind.

4. Hyperspektralkamera nach Anspruch 1, 2 oder 3,
**dadurch gekennzeichnet,**
**dass** die dispersive Einheit (23) des spektral auflösenden Moduls durch ein refraktives Element oder ein wellenlängenselektives empfindliches Element ausgestaltet ist.

5. Hyperspektralkamera nach Anspruch 1, 2 oder 3,
**dadurch gekennzeichnet,**
**dass** die Überlagerungs- und Vergleichseinheit (5) der Auswerteeinheit (32, 42, 5) so ausgestaltet ist, dass dieser eine Datenbank von Spektraldaten zugeordnet ist, vermittels welcher ein Vergleich der spektral aufgelösten Bilddaten (43) mit Messwerten aus der Datenbank erfolgen kann, wobei in Abhängigkeit des Ergebnisses des Vergleichs eine Falschfarbenmarkierung des/der Bilddaten-Bildpunkte/s erfolgt, die/der dem/den entsprechenden Spektraldaten-Bildpunkte/n zugeordnet ist/sind.

6. Hyperspektralkamera nach einem der Ansprüche 1 bis 5, **dadurch gekennzeichnet,**
**dass** eine anwendungsbezogene Weiterverarbeitungsvorrichtung, insbesondere ein separates Computersystem zur Weiterverarbeitung der Bildinformation und der Spektraldaten vorhanden ist.

7. Hyperspektralkamera nach einem der Ansprüche 1 bis 6, **dadurch gekennzeichnet,**
**dass** ein Bildspeicher und/oder ein Bildschirm vorhanden ist/sind auf welchem die Bilddaten mit der Markierung aus der Auswerteeinheit abgelegt bzw. angezeigt werden.

8. Verfahren zur Generierung eines ortsaufgelösten Bildes mit Spektraldateninformation,
**gekennzeichnet durch** die Schritte:
- Auftrennung eines Strahlenwegs (70) eines abzubildenden Objektes (1),
- separate Detektion der beiden Strahlenwege (12, 13), zum einen auf einem ortsauflösenden Detektor (71) mit einer hohen Ortsauflösung x,y der Bildinformation,
zum anderen auf einem orts- und spektral über λ auflösenden Detektor (72) einer niedrigeren Ortsauflösung x',y' der Spektraldaten,
- Umrechnung der x',y'-Auflösung der Spektraldaten auf die x,y-Auflösung der Bildinformation (73), insbesondere unter Zuhilfenahme von Interpolationsverfahren,
- Zusammenführen (74) der x,y-Bildinformation mit der x,y,λ-Spektraldaten.

9. Verfahren nach Anspruch 8,
**dadurch gekennzeichnet,**
**dass** die Bildinformation in einer x,y-Matrix abgelegt werden und die Spektraldaten in einer x',y',λ-Matrix abgelegt werden.

10. Verfahren nach Anspruch 8 oder 9,
**dadurch gekennzeichnet,**
**dass** die Zusammenführung der x,y-Bildinformation mit der x,y,λ-Spektraldaten zu einem Messbild (6) erfolgt und dass die Darstellung des Messbildes als Intensitätsdarstellung spezieller spektraler Intensitäten oder Intensitätsdarstellung verrechneter spektraler Intensitäten erfolgt und/oder als Falschfarben-Darstellung durch Markierung verschiedener Bildpunkte.

11. Verfahren nach einem der Ansprüche 8 bis 10,
**dadurch gekennzeichnet,**
**dass** weiterhin ein
- Vergleich der einzelnen spektralen Daten mit einer in einer Datenbank hinterlegten Spektraldaten erfolgt, eine
- Bestimmung von Korrelationswerten zwischen den einzelnen spektralen Daten mit dem in einer Datenbank hinterlegten Spektraldaten erfolgt, ein
- Vergleich der einzelnen errechneten Korrelationswerte mit einen oder mehreren Schwellwerten erfolgt, eine
- Zuordnung der Korrelationswerte zu den Schwellwerten erfolgt, ein
- Darstellen des Messbildes mit der Einfärbung der einzelnen Bildpunkte passend zu den ermittelten Schwellwerten für jeden einzeln ermittelten spektralen Datenpunkt erfolgt.

12. Verfahren nach einem der Ansprüche 8 bis 11,
**dadurch gekennzeichnet,**
**dass** durch weitere Berechnungsschritte die Abbildungsfehler und geometrische Fehler der hochaufgelösten Daten behoben werden.

13. Verfahren nach einem der Ansprüche 8 bis 12,
**dadurch gekennzeichnet,**
**dass** weiterhin die spektralen Daten in einem Berechnungsverfahren so korrigiert werden, dass Fehler die durch das optische System entstehen korrigiert werden.

14. Verfahren einem der Ansprüche 8 bis 13,
**dadurch gekennzeichnet,**
**dass** es durch eine Hyperspektralkamera (2) nach einem der Ansprüche 1 bis 6 ausgeführt wird.
